# EUROPEAN PATENT APPLICATION

(11) **EP 1 511 270 A2**
(43) Date of publication of application: **02.03.2005**
(21) Application number: 04020294.7
(22) Date of filing: 26.08.2004
(51) Int. Cl.: H04L 29/06, H04L 12/58, H04Q 7/38

(54) **Method and apparatus for managing presence information of a terminal device in a network**

(30) Priority: 29.08.2003 JP 2003306791
(71) Applicant: Kabushiki Kaisha Toshiba, Tokyo 105-8001 (JP)
(72) Inventor: Nose, Masaki Toshiba Corporation IP Division, Minato-ku Tokyo (JP)
(74) Representative: Henkel, Feiler & Hänzel

(57) **Abstract**

A computer system capable of updating presence information automatically according to a change in a state of a user terminal (11) is disclosed. The computer system is composed of a server (10) which manages presence information. The server (10) includes a presence information automatic update system (100) which updates a presence information database (110) automatically according to a change in the state of the user terminal (11) or the user on the basis of position information and device information about the user terminal (11).

## Description

This invention relates to a computer system for managing presence information indicating the state of a terminal connected to a network, and more particularly to a computer system with a presence information automatic update function.

In recent years, an application called, for example, instant messaging (IM) has been developed as a communication method using the Internet or mobile phones. In an IM system, when a message is exchanged between user terminals, presence information indicating the state of the user terminal of the called party (such as, on-line/off-line or busy/ready) is transmitted.

However, presence information is offered on the basis of the information set by users. Therefore, when the state of the called party changes as time passes, the called party has to change the state setting, which is a troublesome operation. To improve the user's operationality, a system capable of setting presence information automatically has been proposed (e.g., Jpn. Pat. Appln. KOKAI Publication No. 2003-76690).

With a system as disclosed in the prior art technical document, presence information can be set automatically. However, presence information cannot be updated automatically according to a change in the state of the user terminal.

An object of the present invention to provide a computer system which includes the function of updating presence information automatically according to a change in the state of a terminal connected to a network.

According to an aspect of the present invention, there is provided a computer system for managing presence information indicating the state of a terminal connected to a network, the computer system comprising: a storage unit which stores the presence information; a data communication unit which conducts data communication with the terminal; a first unit which acquires position information about the terminal on the basis of information acquired from the terminal via the data communication unit; a second unit which acquires device information including the status of use of the user terminal on the basis of information acquired from the terminal via the data communication unit; and an update unit which updates presence information stored in the storage unit by use of the position information and the device information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a system according to an embodiment of the present invention;
FIG. 2 is a block diagram to help explain information handled by the system of the embodiment;
FIG. 3 is a block diagram to help explain the process of updating presence information in the embodiment;
FIG. 4 is a flowchart to help explain the procedure for a first presence information updating method of the embodiment; and
FIG. 5 is a flowchart to help explain the procedure for a second presence information updating method of the embodiment.

Hereinafter, referring to the accompanying drawings, an embodiment of the present invention will be explained.

### (System Configuration)

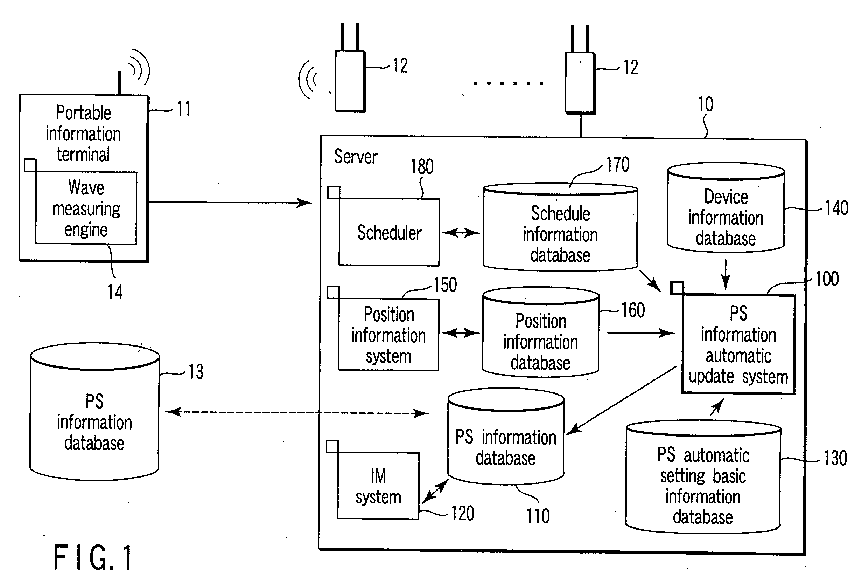

FIG. 1 is a block diagram showing the configuration of a system according to an embodiment of the present invention. In the embodiment, assume a system which deals with business instant messaging (IM) used in a company.

The system has a server (information processing unit) 10, a portable terminal 11 acting as a user terminal (a client terminal), and wireless access points 12. The system is composed of, for example, a wireless LAN in a company and is connected to an external presence information (PS information) database 13 via a network (e.g., the Internet) outside the company.

The portable terminal 11 is a user terminal with a wireless communication function, such as a personal digital assistant (PDA) or a mobile phone operated by the user. The portable terminal 11 has an electromagnetic wave measuring section (or wave measuring engine) 14 for creating received wave information and a transmitting and receiving antenna 15.

The wireless access points 12, which are wireless communication repeaters provided in a plurality of places, relay wireless communication between the portable terminal 11 and the server 10. Specifically, the server 11 exchanges data with the portable terminal 11 via the wireless access point 12 through wireless communication.

The portable terminal 11 measures the radio field intensity at one or more wireless access points (APs) 12 received with the antenna 15. From the result of the measurement, the portable terminal 11 creates wireless information 16 including identification data on AP 12 and client data explained later and transmits the resulting information to the server 10.

The server 10 includes a PS information automatic update system 100 which is the main element of the embodiment, a PS information database 110, an IM system 120, a PS automatic setting basic information database 130, a device information database 140, a position information system 150, a position information database 160, a schedule information database 170, and a scheduler 180. The individual elements of the server 10 are realized using the software in the information processing unit.

The PS information automatic update system 100, as described later, updates the PS information stored in the PS information database 110 automatically on the basis of the position information, device information (information indicating the status of use of the user terminal), and schedule information.

The IM system 120 deals with business instant messaging using the PS information stored in the PS information database 110. The position information system 150 uses the received electromagnetic wave information 16 transmitted from the portable terminal 11 to calculate position information for detecting the position of the portable terminal 11 (the user's location). The scheduler 180 refers to the schedule information database 170, thereby managing schedule information on a user basis.

### (Configuration of Database)

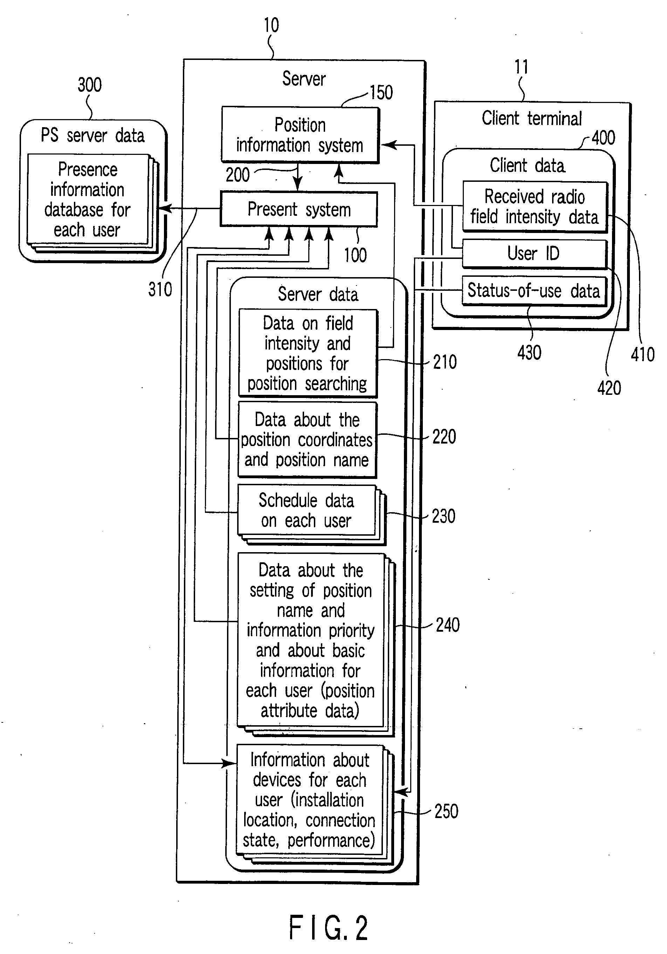

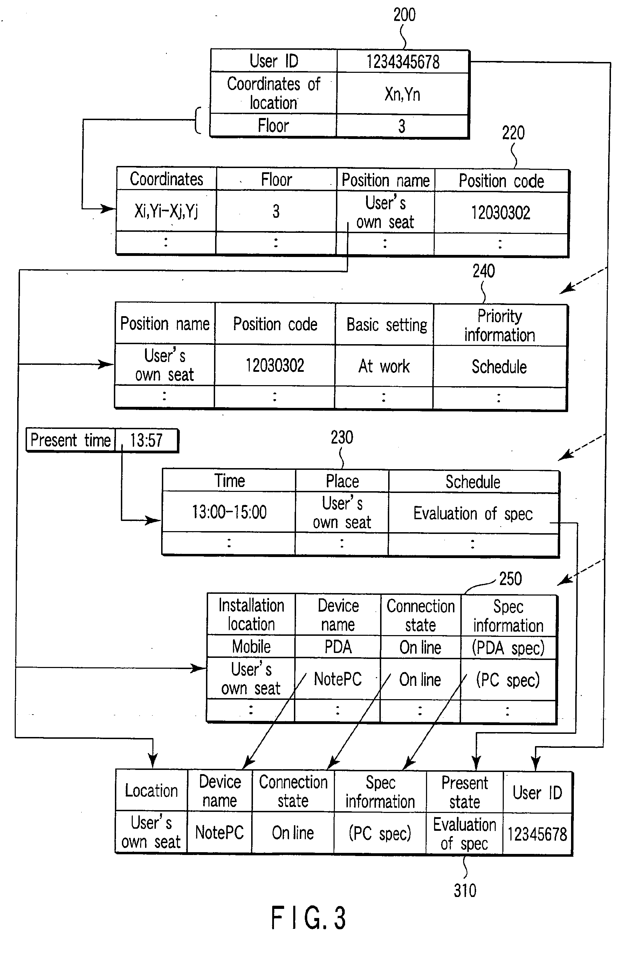

Hereinafter, information and data the server 10 refers to and the configuration of each database will be explained by reference to FIGS. 2 and 3.

As shown in FIG. 2, the PS information automatic update system 100 refers to position information 200 from the position information system 150, data 220 about the position coordinates and position name from the position information database 160, schedule data 230 from the schedule information database 170, position attribute data 240 from the PS automatic setting basic information database 130, and device information from the device information database 140, thereby updating (changing) PS information on each user stored in the PS information database 110.

The position information system 150 takes in wireless information 16 from the information terminal 11 and outputs position information 200 using data 210 about the radio field intensity and about positions for position searching. The position attribute data 240 is data about the position name, priority information, and basic setting information for each user as shown in FIG. 3. The schedule data 230 is set in the schedule information database 170 by the scheduler 180.

The information terminal 11 acting as a client terminal supplies received radio field intensity data 410, user ID, and status-of-use data 430 to the server 10 as client data 400 (data included in the wireless information 16). The status-of-use data 430, which is data indicating the way input devices, such as keys, are operated, is input to the device information database 140 as device information 250.

### (Procedure for a first presence information updating method)

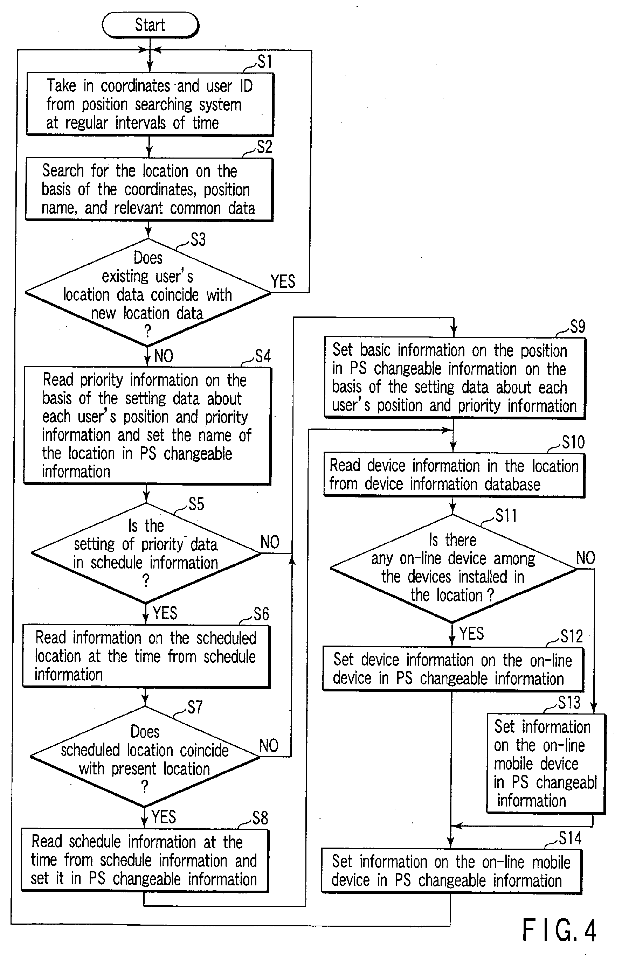

The procedure for updating PS information in the embodiment will be explained by reference to a flowchart in FIG. 4 as well as FIGS. 2 and 3.

First, the PS information database 110 stores the following as PS information 300 on each user: fixed PS information (normally remaining unchanged), including the user's post, telephone number, and mail address, and PS changeable information to be changed according to the user's (user terminal's) location and present state (in conference, during experiment, receiving a visitor, doing office work, or at lunch), or a change in the state of the information terminal 11 (e.g., the connection state). The system 100 sets the PS changeable information 310 stored in the PS information database 110, thereby updating PS information.

The system 100 takes in position information 200 including the user's location and user ID from the position information system (step S1) . As shown in FIG. 3, the position information 200 is position information in a narrow sense composed of the user ID, the coordinates of the location of the user (portable terminal 1) and a specific floor (in the building, the third floor in this case).

As shown in FIG. 3, the system 100 refers to the data 220 related to the position coordinates and position name in the position information database 160 and searches for the location of the user (portable terminal 1) (in this case, the user's own seat) (step S2). If the user's location remains unchanged, the system 100 does not carry out the PS information updating process (YES in step S3).

If the user's location has been changed, the system 100 sets the name of the user's location as PS changeable information 310 as shown in FIG. 3 (NO in step S3, step S4).

Then, the system 100 refers to priority information included in the position attribute data 240 in the PS automatic setting basic information database 130 and determines whether the priority information is schedule information (step S5).

If the priority information is not schedule information, the system 100 sets basic information on the location as PS changeable information 310 (step S3). If the priority information is schedule information, the system 100 refers to information on scheduled location (place) at the present time in the schedule information 230 shown in FIG. 3 (step S6).

The system 100 further determines whether the scheduled location in the scheduled information 230 coincides with the present location (the user's own seat in this case) (step S7). If they do not coincide, the system 100 sets the basic information on the location in the PS changeable information 310 (step S9).

If the scheduled location coincides with the present location, the system 100 reads the scheduled information from the schedule information 230 and sets it in the PS changeable information 310 (YES in step S7, step S8). Here, the scheduled information is scheduled actions in the user's schedule, for example, the examination of the specifications of a product or the like.

According to the above procedure, the system 100 sets user-related information composed of the user's location (the position of the information terminal 11), the user's present situation, and the user ID as the PS changeable information 310. Here, as for the user's present state, if the schedule information is not used, "at work" basically set as position attribute data 240 is set.

Next, the system 100 refers to the device information 250 in the device information database 140 and reads device information corresponding to the location (step S10). The system 100 determines whether there is an on-line device among the devices provided in the location (step S11). As shown in FIG. 3, at the user's own seat, a notebook PC is installed as an on-line device. Thus, the system 100 sets the device information in the PS changeable information 310 (step S12).

If an on-line device has not been installed in the location, the system 100 sets device information about an on-line mobile device (portable terminal 11) in the PS changeable information 310 (NO in step S11, step S13).

In this way, the system 100 sets PS changeable information 310 according to the user's state according to the schedule information or a change in the state of the user terminal, thereby updating PS information 300 on each user in the PS information database 110 (step S14).

### (Procedure for a second presence information updating method)

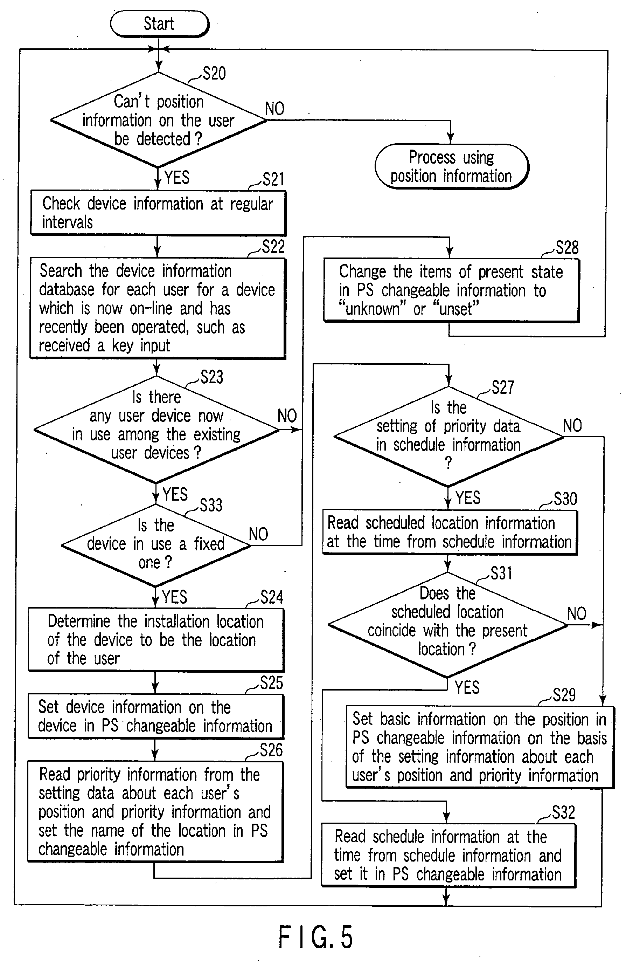

Next, the procedure for updating PS information when position information cannot be obtained in the embodiment will be explained by reference to a flowchart in FIG. 5.

When the system 100 cannot get position information 200 from the position information system 150, it checks device information on the user terminal 11 at regular intervals (YES in step S20, step S21). That is, the system 100 refers to the device information database 140 and searches for a device to which status-of-use data 430 has been input on-line (step S22).

If there is no device currently being used among the existing devices, the system 100 changes the items related to information about the location, device specifications, and present conditions to unknown or unsetting (NO in step S23, step S28).

If there is a device currently being used among the existing devices, the system 100 determines the installation location of the device to be the user's location (YES in step S23, YES in step S33, step S24). Therefore, when the device the user uses is a portable terminal 11 serving as a mobile device, the system 100 cannot determine the user's location. Thus, the system 100 sets the items about the location, present conditions, and others to unknown or unset (NO in step S33, step S28).

Hereinafter, explanation will be given on the consumption that the device in use is a device connected to a wired LAN, such as a PC.

The system 100 sets device information about a PC installed at the user's own seat in the PS changeable information 310 as shown in FIG. 3 (step S25). The system 100 uses the installation location of the device as the user's location and sets the name of the user's location as PS changeable information 310 (step S26). Here, the system 100 refers to priority information included in the position attribute data 240 in the PS automatic setting basic information database 130 and determines whether the priority information is schedule information (step S27).

If the priority information is not schedule information, the system 100 sets basic information on the location in the PS changeable information 310 (NO in step S27, step S29). If the priority information is schedule information, the system 100 refers to the scheduled location information (place) at the present time in the schedule information 230 of FIG. 3 (step S30).

Furthermore, the system 100 determines whether the scheduled location in the schedule information 230 coincides with the present location (the user's own seat in this case) (step S31). If they do not coincide with each other, the system 100 sets basic information about the location in the PS changeable information 310 (step S29).

When the scheduled location coincides with the present location, the system 100 reads scheduled information from the schedule information 230 and sets the scheduled information in the PS changeable information 310 (YES in step S31, step S32).

As described above, with the embodiment, the presence information held in the presence information database can be updated automatically by use of the position of the user terminal or device information according to a change in the user terminal or the state of the user operating the user terminal (including the position and the status of use of the device). The embodiment is particularly useful when being applied to a system which deals with instant messagings.

## Claims

1. A computer system **characterized by** comprising:
a storage unit (110) which stores presence information indicating a state of a terminal (11) connected to a network;
a data communication unit (12) which conducts data communication with the terminal;
a first unit (150) which acquires position information about the terminal on the basis of information acquired from the terminal via the data communication unit;
a second unit (100) which acquires device information including a status of use of the user terminal on the basis of information acquired from the terminal via the data communication unit; and
an update unit (100) which updates presence information stored in the storage unit by use of the position information and the device information.

2. The computer system according to claim 1, **characterized by** further comprising:
a system (120) which deals with an instant messaging using the presence information.

3. The computer system according to claim 1, **characterized in that** the terminal is a portable device with a wireless communication function, and
the first unit includes a position information system which determines the position of the terminal on the basis of received radio field intensity data acquired from the terminal via the data communication unit.

4. The computer system according to claim 1, **characterized in that** the first unit determines the position of the terminal on the basis of information indicating the status of use of a device and information indicating the location of the device acquired from the terminal via the data communication unit.

5. The computer system according to claim 1, **characterized in that** the second unit includes a storage unit which stores device information including the location of the device of the terminal and the specifications of the device.

6. The computer system according to claim 1, **characterized by** further comprising: a storage unit (170) which stores schedule information about an user who operates the terminal,
wherein the update unit updates the presence information by reference to the schedule information.

7. The computer system according to claim 1, **characterized by** further comprising: a schedule information storage unit (170) which stores schedule information about each user who operates the terminal,
wherein the update unit detects the location of the user from position information acquired from the first unit, acquires state information in the schedule information corresponding to the location and present time, and updates the presence information on the basis of the state information.

8. The computer system according to claim 1, **characterized by** further comprising: a second storage unit which stores schedule information about each user who operates the terminal,
wherein the update unit estimates the location of the user from position information on the terminal and, when the location disagrees with a scheduled location at the present time set in the schedule information, updates the presence information on the basis of previously set basic information.

9. The computer system according to claim 1, **characterized in that** the second unit acquires data representing the operating state of the input device of' the terminal as information acquired from the terminal.

10. The computer system according to claim 1, **characterized in that** the data communication unit (12) includes a wired data communication unit.

11. The computer system according to claim 10, **characterized by** further comprising: a storage unit which stores device information including the location of a terminal and a specification of the device,
wherein the update unit detects the location of the terminal on the basis of information acquired from the terminal via the wired communication unit and device information acquired by reference to the storage unit, and updates the presence information regarding the location of the terminal or an user who operates the terminal.

12. The computer system according to claim 10, **characterized by** further comprising: a storage unit which stores schedule information about an user who operates the terminal,
wherein the update unit detects the location of the user from the device information, acquires state information about the schedule information corresponding to the location and the present time, and updates the presence information on the basis of the state information.

13. The computer system according to claim 12, **characterized by** further comprising: a storage unit which stores schedule information about an user who operates the terminal,
wherein the update unit estimates the location of the user from the device information and, when the location disagrees with a scheduled location at the present time set in the schedule information, updates the presence information on the basis of previously set basic information.

14. A method of managing presence information on a terminal in a network, the method **characterized by** comprising:
acquiring position information about the terminal on the basis of information acquired from the terminal via a data communication unit;
acquiring device information including a status of use of the terminal on the basis of information acquired from the terminal via the data communication unit; and
updating the presence information by use of the position information and the device information

15. The method according to claim 14, **characterized in that** acquiring the device information includes acquiring device information including the status of use of the terminal on the basis of information acquired from the terminal via a wired communication unit.
